# EUROPÄISCHE PATENTSCHRIFT

(11) **EP 3 105 093 B1**
(45) Veröffentlichungstag und Bekanntmachung des Hinweises auf die Patenterteilung: **11.10.2017**
(21) Anmeldenummer: 15700527.3
(22) Anmeldetag: 15.01.2015
(51) Int. Cl.: B60W 30/095, B60W 40/04, B60W 50/14, B60W 30/09, B60W 30/10

(54) **VERFAHREN ZUM BETRIEB EINES SICHERHEITSSYSTEMS EINES KRAFTFAHRZEUGS**
METHOD FOR OPERATING A SAFETY SYSTEM OF A MOTOR VEHICLE
PROCÉDÉ POUR FAIRE FONCTIONNER UN SYSTÈME DE SÉCURITÉ D'UN VÉHICULE AUTOMOBILE

(30) Priorität: 15.02.2014 DE 102014002113
(43) Veröffentlichungstag der Anmeldung: 21.12.2016
(73) Patentinhaber: Audi AG, 85045 Ingolstadt (DE)
(72) Erfinder: HOFMANN, Ulrich, 85049 Ingolstadt (DE); BOUZOURAA, Mohamed Essayed, 85051 Ingolstadt (DE); WEIHERER, Tobias, 85057 Ingolstadt (DE)
(74) Vertreter: Thielmann, Frank
(86) Internationale Anmeldenummer: PCT/EP2015/000064
(87) Internationale Veröffentlichungsnummer: WO 2015/120952

(56) Entgegenhaltungen:
- EP-A1- 1 625 979
- EP-A1- 2 251 240
- EP-A1- 2 404 804
- DE-A1-102008 036 131
- US-A- 6 032 097
- US-A1- 2012 323 406
- TOBIAS WEIHERER ET AL: "A generic map based environment representation for driver assistance systems applied to detect convoy tracks", INTELLIGENT TRANSPORTATION SYSTEMS (ITSC), 2012 15TH INTERNATIONAL IEEE CONFERENCE ON, IEEE, 16. September 2012 (2012-09-16), Seiten 691-696, XP032263990, DOI: 10.1109/ITSC.2012.6338658 ISBN: 978-1-4673-3064-0
- REICHEL M ET AL: "Situation aspect modelling and classification using the Scenario Based Random Forest algorithm for convoy merging situations", INTELLIGENT TRANSPORTATION SYSTEMS (ITSC), 2010 13TH INTERNATIONAL IEEE CONFERENCE ON, IEEE, PISCATAWAY, NJ, USA, 19. September 2010 (2010-09-19), Seiten 360-366, XP031792741, ISBN: 978-1-4244-7657-2

## Beschreibung

Die Erfindung betrifft ein Verfahren nach dem Oberbegriff des Anspruchs 1 zum Betrieb eines Sicherheitssystems eines Kraftfahrzeugs, wobei aus die Umgebung des Kraftfahrzeugs beschreibenden Umfelddaten und auf das Kraftfahrzeug bezogenen Egodaten wenigstens ein Gefährdungswert ermittelt wird, wobei bei Erfüllung wenigstens eines Aktionskriteriums für den Gefährdungswert eine Warninformation an den Fahrer ausgegeben wird und/oder wenigstens eine Maßnahme, insbesondere ein Fahreingriff, zur Erhöhung der Sicherheit des Kraftfahrzeugs durchgeführt wird. EP 1 625 979 A1 offenbart ein Verfahren nach dem Oberbegriff des Anspruchs 1. Sicherheitssysteme für Kraftfahrzeuge sind im Stand der Technik bereits bekannt. Diese analysieren üblicherweise die aktuelle Fahrsituation, wobei die Umgebung des Kraftfahrzeugs beschreibende Umfelddaten, die beispielsweise durch Sensoren, Kraftfahrzeug-zu-Kraftfahrzeug-Kommunikation, digitale Kartendaten eines Navigationssystems und dergleichen gewonnen werden können, und auf das Kraftfahrzeug bezogene Egodaten, die beispielsweise die aktuelle Fahrdynamik des Kraftfahrzeugs, dessen Ausdehnung und dergleichen beschreiben können, verwendet werden. Ergebnis dieser Fahrsituationsanalyse ist eine Beschreibung des vorliegenden Gefährdungspotentials, welche durch einen oder mehrere Gefährdungswerte abgebildet werden kann. Um eine differenziertere Beschreibung zu ermöglichen, werden meist mehrere Gefährdungswerte verwendet.

Diese Gefährdungswerte werden gegen Aktionskriterien geprüft, beispielsweise auf die Überschreitung von Schwellwerten und dergleichen. Ist der Gefährdungswert beispielsweise eine Kollisionswahrscheinlichkeit, kann eine Überschreitung eines Schwellwertes für die Kollisionswahrscheinlichkeit zu weiteren Maßnahmen führen. Zu ergreifende Maßnahmen können vielfältiger Natur sein, beispielsweise also die Ausgabe von Warninformationen an den Fahrer genauso umfassen können wie die Fahreingriffe zur Erhöhung der Sicherheit des Kraftfahrzeugs. Neben Fahreingriffen können dabei auch steuernde Maßnahmen an anderen Fahrzeugsystemen oder ebenso an der Lenkung und der Längsführung umfassen, beispielsweise die Vorkonditionierung verschiedener Fahrzeugsysteme. Beispiele hierfür sind die Vorbefüllung von Bremsen, die Aktivierung reversibler Gurtstraffer und Kopfstützen und dergleichen.

Die hauptsächliche Schwierigkeit beim Entwurf solcher Sicherheitssysteme liegt in der Fahrsituationsanalyse, da es häufig schwierig ist, eine Gefährdung einzuschätzen oder ungewöhnliches Verhalten anderer Verkehrsteilnehmer zu erkennen. Hauptsächlich sind dabei Sicherheitssysteme bekannt, die Gefährdungswerte bezüglich eines unmittelbar vorausfahrenden Fahrzeugs oder eines Hindernisses berechnen, wobei hauptsächliche Eingangsgrößen der Abstand zum unmittelbar vorausfahrenden Fahrzeug und/oder dessen Verzögerung sind. In diesem Bereich existieren bereits in Serie verfügbare Lösungen, beispielsweise Notbremssysteme und/oder Abstandswarnsysteme. Als Gefährdungswert kann dabei neben einer abstrakteren Kollisionswahrscheinlichkeit auch die Verwendung der Zeit bis zur Kollision (Time to Collision - TTC) und dergleichen vorgesehen sein. Die Aktionskriterien zielen dabei meist auf eine gestaffelte Auslösung von Maßnahmen ab. In einem Beispiel kann bei der Unterschreitung definierter Zeitschwellen für die TTC zunächst eine Ausgabe von Warnungen und in späteren Aktionsstufen eine definierte Bremsverzögerung vorgesehen sein.

Bekannte Systeme beziehen sich in ihrer Analyse mithin hauptsächlich auf das unmittelbar vorausfahrende Fahrzeug, insbesondere auf den Abstand zu diesem Fahrzeug und die Relativdynamik, insbesondere die Relativgeschwindigkeit und/oder dessen Beschleunigungswerte. Dies ist hauptsächlich dadurch begründet, dass es sich bei dem unmittelbar vorausfahrenden Fahrzeug um ein grundsätzlich sichtbares und somit durch Sensoren leicht zu erfassendes Objekt handelt. Meist wird durch solche Sicherheitssysteme berechnet, wie stark eine Reaktion des eigenen Kraftfahrzeugs ausfallen müsste, um eine kritische Situation zu vermeiden oder Kollisionsfolgen zu mindern. Eine Beurteilung des Fahrverhaltens anderer Kraftfahrzeuge erfolgt nicht, so dass die Fahrsituationsanalyse in bekannten Sicherheitssystemen nicht vollständig ist und ein weiterer Verbesserungsbedarf besteht.

Der Erfindung liegt daher die Aufgabe zugrunde, eine Möglichkeit zur Verbesserung der Fahrsituationsanalyse anzugeben, so dass die Ermittlung von Gefährdungswerten weiter verbessert wird.

Zur Lösung dieser Aufgabe ist bei einem Verfahren der eingangs genannten Art erfindungsgemäß vorgesehen, dass als Kolonnenspurinformation wenigstens ein Kolonnenverlauf, der eine mittlere Bahn der Kolonne beschreibt, aus dem zeitlichen Positionsverlauf der Fahrzeuge der Kolonne ermittelt wird. Erfindungsgemäß wird mithin nicht nur das Verhalten eines unmittelbar vorausfahrenden Kraftfahrzeugs beobachtet, sondern das Gesamtverhalten der vorausfahrenden Kolonne, welches, wie im Folgenden noch näher dargelegt werden wird, ein äußerst nützliches Mittel darstellt, um die Ermittlung des Gefährdungswertes und die Detektion von Gefährdungen zu verfeinern, um eine verbesserte Ansteuerung von Sicherheitssystemen zu erzielen. Aus den Umfelddaten kann das Sicherheitssystem die vorausfahrenden Kolonnen erkennen und somit eine Beschreibung des Kolonnenverhaltens, die Kolonnenspurinformation, herleiten, welche weiter analysiert werden kann, um Hinweise auf eine Gefährdung, beispielsweise ein zu erwartendes, ohne diese Analyse überraschendes Verhalten, zu ermitteln. Insbesondere wird hierdurch eine frühzeitigere Erkennung von Gefährdungen und somit eine frühzeitigere Auslösung von Warnungen ermöglicht, wobei eine Vielzahl von Möglichkeiten existiert, die Kolonnenspurinformation konkret im Hinblick auf Gefährdungsinformationen und schlussendlich den Gefährdungswert auszuwerten, welche insbesondere durch einen Vergleich mit einem Vergleichsverhalten, das als Normverhalten angesehen werden kann, zweckmäßig realisiert werden können.

Als Kolonnenspurinformation wird wenigstens ein Kolonnenverlauf aus dem zeitlichen Positionsverlauf der Fahrzeuge der Kolonne ermittelt. Zweckmäßigerweise kann als Kolonnenspurinformation wenigstens ein ortsbezogener Geschwindigkeitsverlauf und/oder Beschleunigungsverlauf in der Kolonne ermittelt werden. Bevorzugt enthält die Kolonnenspurinformation mithin den Kolonnenverlauf, den Geschwindigkeitsverlauf, worin letztlich jedem Ort des Positionsverlaufs ein Geschwindigkeitsverlauf zugeordnet wird, und auf analoge Weise einen Beschleunigungsverlauf. Die akkumulierten Positionen der Fahrzeuge der Kolonne und die akkumulierten Dynamikgrößen (Geschwindigkeiten, Beschleunigungen/Verzögerungen) werden genutzt, um, insbesondere unter Verwendung statistischer Methoden, ein Gesamtverhalten der Kolonne herzuleiten, nachdem davon ausgegangen werden kann, dass in einer Kolonne fahrende Kraftfahrzeuge sich im Wesentlichen gleich verhalten. Als Kolonnenverlauf wird eine mittlere Bahn der Kolonne ermittelt. Es wird mithin ausgenutzt, dass im Fall einer Kolonne Informationen von mehreren Fahrzeugen vorliegen, so dass deren historische Bewegungen bis hin zum aktuellen Zeitpunkt verkettet werden können und sich insgesamt eine Information über den räumlichen Kolonnenverlauf ergibt, die auch als "Kolonnenspur" bezeichnet werden kann. Dabei sei im Übrigen darauf hingewiesen, dass bei der Ermittlung der Kolonnenspurinformation Fahrzeuge, die sich stark abweichend verhalten, gegebenenfalls zunächst nicht berücksichtigt werden können. Nimmt beispielsweise ein einzelnes Fahrzeug einen gänzlich anderen Weg als die Majorität der Fahrzeuge der Kolonne, kann dieses von der Ermittlung der Kolonnenspurinformation ausgeschlossen werden, jedoch nicht zwangsläufig, wie im Folgenden noch näher erläutert werden wird, von der Auswertung bezüglich des Gefährdungswerts. Es können verschiedene Ausschlusskriterien vorgesehen sein, die die Daten eines Fahrzeugs der Ermittlung der Kolonnenspurinformation entziehen, nachdem beispielsweise auch ein Verlassen der Kolonne durch Analyse des zeitlichen Positionsverlaufs und dergleichen detektiert werden kann, beispielsweise bei einem Spurwechsel, durch den sich ein Fahrzeug aus der Kolonne entfernt. Für wenigstens einen Teil des vorausliegenden Kolonnenverlaufs liegen üblicherweise dann auch Daten mehrerer Fahrzeuge vor, die mit den bekannten Methoden der Informationstheorie, insbesondere also auch unter der Berücksichtigung von Messfehlern und dergleichen, kombiniert werden können, um die Kolonnenspurinformation zu erhalten.

Dabei kann insbesondere zunächst vorgesehen sein, dass die Verläufe ortsfest ermittelt werden, mithin beispielsweise in einem geodätischen beziehungsweise allgemein unbewegten Koordinatensystem. Grundsätzlich denkbar ist es ferner, die Kolonnenspurinformation in einem mit dem eigenen Kraftfahrzeug bewegten Koordinatensystem zu bestimmen, was jedoch weniger bevorzugt ist. Als äußerst zweckmäßig hat sich jedoch erwiesen, alternativ oder bevorzugt zusätzlich die Verläufe in wenigstens einem mit einem Fahrzeug der Kolonne bewegten Koordinatensystem zu ermitteln, insbesondere in einem mit dem langsamsten voranfahrenden Fahrzeug mitbewegten Koordinatensystem. Wie im Folgenden noch näher dargelegt werden wird, kann durch die Analyse von akkumulierten Geschwindigkeits- und Beschleunigungsprofilen in einem mitbewegten Koordinatensystem der Einfluss dieses Verkehrsteilnehmers repräsentiert werden. Bevorzugt handelt es sich bei dem Fahrzeug um ein langsames Fahrzeug, das von anderen Fahrzeugen der Kolonne überholt wird, so dass eine mitbewegte Beschreibung der Überholbahn erstellt und beispielsweise mittels eines Klassifikators als typische Signatur erkannt werden kann. Bei einem solchen langsamen Fahrzeug kann es sich beispielsweise um einen Lastkraftwagen, einen Traktor oder dergleichen handeln, der üblicherweise von anderen Fahrzeugen überholt wird; so dass diese letztlich eine Art "Überholkolonne" bilden, die sich zur weiteren Auswertung besonders geeignet in dem mit dem langsamen Fahrzeug mitbewegten Koordinatensystem beschreiben lassen. Es sind durchaus Fälle denkbar, in denen, nachdem die Überholvorgänge unterschiedlicher Fahrzeuge in einem ortsfesten Koordinatensystem immer an unterschiedlichen Orten erfolgen, eine tatsächliche Kolonne nur in einem derartigen mitbewegten Koordinatensystem festgestellt werden kann.

Eine besonders vorteilhafte Ausgestaltung der vorliegenden Erfindung sieht vor, dass eine Abweichung des Verhaltens wenigstens eines Fahrzeugs der Kolonne von einem Vergleichsverhalten ermittelt und bei der Ermittlung des Gefährdungswertes berücksichtigt wird. Das Vergleichsverhalten stellt dabei eine Art "Normverhalten" dar, so dass eine höhere Abweichung von dem Vergleichsverhalten üblicherweise für eine höhere Gefährdung spricht und somit zu einem höheren Gefährdungswert führt. Dabei ist es sowohl denkbar, dass aus der Kolonnenspurinformation das Vergleichsverhalten folgt, insbesondere dann, wenn das Verhalten einzelner Fahrzeuge der Kolonne mit dem Verhalten der Gesamtkolonne verglichen werden soll, möglich ist es jedoch auch, dass das Vergleichsverhalten von einer anderen Quelle herrührt, so dass das durch die Kolonnenspurinformation beschriebene Kolonnenverhalten mit dem Vergleichsverhalten verglichen werden kann. Das Vergleichsverhalten gibt dabei letztlich an, wie sich ein einzelnes Fahrzeug beziehungsweise die Kolonne verhalten sollten, wenn nur eine äußerst geringe Gefährdung vorliegt, so dass eine Abweichung meist für eine höhere Gefährdung spricht, wie im Folgenden noch näher diskutiert werden soll.

So kann beispielsweise vorgesehen sein, dass mit einem aus einer Vorgabe und/oder statistisch ermittelten Vergleichsverhalten verglichen wird, insbesondere bezüglich des Kolonnenverlaufs und des Geschwindigkeitsverlaufs. In einem solchen Fall findet bevorzugt ein Vergleich des durch die Kolonnenspurinformation beschriebenen Kolonnenverhaltens mit dem Vergleichsverhalten statt, wobei ein derartiges Vergleichsverhalten selbstverständlich auch für das Verhalten einzelner Kraftfahrzeuge herangezogen und ausgewertet werden kann, bevorzugt zusätzlich.

Als Vorgabe für das Vergleichsverhalten kann beispielsweise ein bekannter Fahrspurverlauf, dem die Kolonne folgen soll, verwendet werden. Ein derartiger Fahrspurverlauf kann beispielsweise in digitalen Kartendaten eines Navigationssystems des Kraftfahrzeugs enthalten sein und der Annahme zugrunde gelegt werden, dass es das Normverhalten ist, diesem Fahrspurverlauf zu folgen. Beispielsweise kann mithin der Fahrspurverlauf mit dem Kolonnenverlauf verglichen werden. Eine andere mögliche Quelle für einen derartigen Fahrspurverlauf ist die Auswertung von Sensordaten von Umfeldsensoren, insbesondere einer nach vorne gerichteten Kamera, wie sie häufig von querführenden Fahrerassistenzsystemen genutzt wird, beispielsweise einem Spurhaltesystem, um den weiteren Fahrspurverlauf festzustellen. Dabei können beispielsweise Fahrspurmarkierungen in Bildern der Kamera detektiert und ausgewertet werden. Mithin kann beispielsweise ein Spurhaltesystem den Fahrspurverlauf als Normverhalten an das Sicherheitssystem liefern, wo dieser entsprechend herangezogen wird und beispielsweise mit dem Kolonnenverlauf verglichen wird. Es sei darauf hingewiesen, dass es selbstverständlich auch denkbar ist, derartige Fahrspurverläufe als Grundlage für Geschwindigkeits- und Beschleunigungsverläufe heranzuziehen, die einen Teil des Vergleichsverhaltens bilden können, nachdem üblicherweise bekannt beziehungsweise feststellbar ist, wie sich Kraftfahrzeuge verhalten, wenn sie bestimmten Bahnen folgen sollen. In diesem Zusammenhang können auch beispielsweise aus einer Verkehrszeichenerkennung und/oder digitalen Kartendaten bekannte Geschwindigkeitsbegrenzungen und dergleichen berücksichtigt werden.

Eine weitere Möglichkeit einer Vorgabe für das Vergleichsverhalten ist ein eine hohe Gleichmäßigkeit beschreibendes Gleichmäßigkeitsmaß für den Kolonnenverlauf und/oder den Geschwindigkeitsverlauf und/oder den Beschleunigungsverlauf. Dabei wird also eine a priori-Erwartung angesetzt, die sich auf eine Gleichmäßigkeit im Geschwindigkeits- und Krümmungsverlauf einer Kolonnenspur bezieht. Dem liegt die Erkenntnis zugrunde, dass bei vorliegenden Gefährdungen häufig ein starkes Abbremsen, ein Ausweichen und dergleichen auftreten, was dieser Vorgabe widersprechen würde und entsprechend in dem Vergleich detektiert werden kann.

Wie bereits erwähnt wurde, kann insbesondere bezüglich eines Geschwindigkeitsverlaufs auch eine bekannte Geschwindigkeitsbegrenzung, beispielsweise aus digitalen Kartendaten des Navigationssystems des Kraftfahrzeugs und/oder einer Verkehrszeichenerkennung verwendet werden.

Eine bevorzugte Weiterbildung der vorliegenden Erfindung sieht eine statistische Auswertung von Kolonnenspurinformationen vieler Fahrzeuge über die Zeit hinweg vor, mithin einer Akkumulation des Wissens einer Vielzahl von Kraftfahrzeugen, die die entsprechende Fahrspur, auf der sich das Kraftfahrzeug gerade befindet, bereits befahren haben. Hierzu kann vorgesehen sein, dass ermittelte Kolonnenspurinformationen, insbesondere über Kraftfahrzeug-zu-Infrastruktur-Kommunikation und/oder ein Mobilfunknetz, an eine zentrale Recheneinrichtung, insbesondere einen Server, übertragen werden, wo die Kolonnenspurinformationen mehrerer Kraftfahrzeuge zur Ermittlung des Vergleichsverhaltens statistisch ausgewertet werden und das Vergleichsverhalten insbesondere ortsbezogen an Kraftfahrzeuge zum Vergleich mit aktueller Kolonnenspurinformation übermittelt wird. Auf einer zentralen Recheneinrichtung, insbesondere einem Server, können mithin die detektierten Kolonnenspurinformationen, mithin insbesondere die Kolonnenverläufe und Geschwindigkeits- sowie Beschleunigungsprofile in einer Datenbank fusioniert werden, um hieraus ein Normverhalten als Vergleichsverhalten zu bestimmen, das wiederum über Kraftfahrzeug-zu-Infrastruktur-Kommunikation und/oder ein Mobilfunknetz den Kraftfahrzeugen mit dem Sicherheitssystem, die die entsprechende Stelle passieren, zur Verfügung gestellt werden kann. Abweichungen von diesem Vergleichsverhalten dienen dann als Hinweis auf eine ungewöhnliche Verkehrssituation. Derartige Datenbanken werden ständig mit aktuell erhaltenen Informationen der mit dem Sicherheitssystem ausgestatteten Kraftfahrzeuge ergänzt und aktualisiert, so dass sie letztlich auch als a priori-Datenquelle für einen Vergleich mit dem detektierten Einzelverhalten oder Kolonnenverhalten dienen können.

Eine vorteilhafte weitere Ausgestaltung in diesem Zusammenhang sieht vor, dass die Vergleichsverhalten abhängig von wenigstens einem die Umgebungsbedingungen beschreibenden Umgebungsparameter ermittelt werden, insbesondere abhängig von Witterungsbedingungen und/oder Beleuchtungsbedingungen und/oder einer Tageszeit und/oder einem Wochentag. In diesem Fall findet also nicht nur eine Fusionierung von Kolonnenspurinformationen verschiedener Kraftfahrzeuge statt, sondern es werden auch Umgebungsbedingungen berücksichtigt, insbesondere Witterungsbedingungen, Beleuchtungsbedingungen, die Tageszeit und der Wochentag. Hieraus ergibt sich dann ein tageszeit-, witterungs-, beleuchtungs- und wochentagabhängiges Normverhalten, so dass auch unterschiedliche Situationen in dem Vergleichsverhalten berücksichtigt sind.

Wie bereits erwähnt wurde, existieren im Rahmen der vorliegenden Erfindung zwei grundsätzliche Vergleichsmöglichkeiten, die bevorzugt beide angewandt werden können, nachdem es im Übrigen auch problemlos denkbar ist, mehrere Vergleichsverhalten und mithin mehrere Vergleiche heranzuziehen.

So sieht eine erste Ausgestaltung der vorliegenden Erfindung vor, dass das durch die Kolonnenspurinformation beschriebene Kolonnenverhalten mit dem Vergleichsverhalten verglichen wird. Dabei ist das Vergleichsverhalten bevorzugt aus einer Vorgabe abgeleitet und/oder wird von der zentralen Recheneinrichtung, wie beschrieben, zur Verfügung gestellt; es ergibt sich also letztlich ein Vergleich des akkumulierten Verhaltens aller Fahrzeuge der Kolonne mit einem Normverhalten. Abweichungen von diesem Normverhalten, die selbstverständlich auch genauer analysiert und ausgewertet werden können, deuten mithin darauf hin, dass eine Gefährdung vorliegen könnte. So kann beispielsweise vorgesehen sein, dass bei einer die Umfahrung eines Ortes andeutenden Abweichung des Kolonnenverlaufs und/oder Geschwindigkeitsverlaufs von einem Fahrspurverlauf beziehungsweise Vergleichsgeschwindigkeitsverlauf, die in dem Vergleich festgestellt wurde, auf eine Gefahrenstelle an dem Ort geschlossen wird. Umfahren beispielsweise die Fahrzeuge der Kolonne allesamt ein Unfallfahrzeug, werden sie zum einen vom als Vorgabe bekannten Fahrspurverlauf/Vergleichsverlauf abweichen, zum anderen aber auch einen anderen Geschwindigkeits- und Beschleunigungsverlauf aufweisen, nachdem auf das Unfallfahrzeug voraussichtlich gebremst werden wird. Auch andere Gefahrenstellen können selbstverständlich existieren, beispielsweise Baustellen, verlorene Ladung oder aber auch Überreste eines geplatzten Reifens. Das erfindungsgemäße Verfahren erlaubt es mithin frühzeitig, also nicht erst durch Beobachtung nur des Verhaltens des unmittelbar vorausfahrenden Verkehrsteilnehmers, derartige Gefahrenquellen zu erkennen und zu lokalisieren. Die Lokalisierung kann genutzt werden, wenn eine diese enthaltende Gefährdungsinformation ermittelt wird, um beispielsweise als spezielle Maßnahme auch die Ausgabe eines Hinweises an den Fahrer zu ermöglichen, beispielsweise der Art "Achtung! Gefahrenstelle in 100 m!".

Überholvorgänge, beispielsweise im Fall eines Traktors, die selbstverständlich auch für alle Fahrzeuge außer dem langsamen Fahrzeug zu einem Abweichen vom üblichen Fahrspurverlauf führen, lassen sich am ehesten erkennen, wenn die Kolonnenspurinformation (zusätzlich) in dem mitbewegten Koordinatensystem des langsamen Fahrzeugs ermittelt wird, denn nur ausgehend von diesem, welches sich ja fortbewegt, sind die Überholbahnen sinnvoll vergleichbar beziehungsweise mittelbar, da in einem ortsfesten Koordinatensystem die Überholvorgänge ja immer an anderen Orten stattfinden würden. Allein also durch die Betrachtung in dem mitbewegten Koordinatensystem kann eine Klassifizierung als Überholvorgang bzw. "Überholkolonne" an sich erfolgen; es kann jedoch auch die Überholbahn selber analysiert und klassifiziert werden, wobei selbstverständlich auch ein Vergleich mit einer "Normüberholbahn" als Vergleichsverhalten im Rahmen der vorliegenden Erfindung denkbar ist, insbesondere auch pro Fahrzeug. Auch bezüglich der Feststellung, dass ein langsames Fahrzeug durch alle anderen Mitglieder der Kolonne überholt wird, lässt sich im Übrigen eine entsprechende Warninformation an den Fahrer herleiten, beispielsweise "Achtung! Langsames Fahrzeug voraus!".

Es kann ferner vorgesehen sein, dass bei einer erkannten Überholsituation als Abweichung eine Geschwindigkeitsdifferenz der maximalen Geschwindigkeit überholender Fahrzeuge von einer Geschwindigkeitsbegrenzung betrachtet wird. Es ist mithin auch denkbar, die maximale Differenzgeschwindigkeit der überholenden Fahrzeuge zu einem beispielsweise aus digitalen Kartendaten oder durch Verkehrszeichenerkennung erkannten Geschwindigkeitsbegrenzung als Maß für eine Gefährdung zu verwenden; denkbar ist es zudem auch, als Gefährdungsmaß die insbesondere mittlere Differenzgeschwindigkeit der überholenden Fahrzeuge zu dem langsamen Fahrzeug einzusetzen.

Als zweite, idealerweise zusätzlich eingesetzte Möglichkeit eines Vergleichs kann vorgesehen sein, dass das Verhalten eines einzelnen, insbesondere jedes einzelnen, Fahrzeugs der Kolonne mit dem Vergleichsverhalten verglichen wird. Auf diese Weise wird also überprüft, ob ein einzelnes Kraftfahrzeug einen Hinweis darauf gibt, dass eine allgemeine Gefährdungssituation oder eine von diesem ausgehende Gefährdungssituation vorliegen könnte. Dabei ist es zweckmäßig möglich, als Vergleichsverhalten das aus dem Verhalten aller Kraftfahrzeuge der Kolonne gebildete Kolonnenverhalten zu verwenden, wobei bei einer festgestellten, ein Kriterium erfüllenden Abweichung des Verhaltens eines Fahrzeugs vom Kolonnenverhalten ein höherer Gefährdungswert angenommen wird und/oder eine Art der Abweichung ermittelt wird, insbesondere ein Schlingern des Fahrzeugs.

In diesem Fall kann mithin das Verhalten einzelner Fahrzeuge in den Kolonnen mit den akkumulierten Orts- und Dynamikgrößen der gesamten Kolonne verglichen und mithin gegenüber der Majorität der Fahrzeuge plausibilisiert werden. Wird eine Abweichung des Verhaltens eines einzelnen Fahrzeugs vom Verhalten der ganzen Kolonne erkannt, kann auf eine Gefahrensituation geschlossen werden und der Fahrer beispielsweise frühzeitig gewarnt werden. Das Kolonnenverhalten kann mithin für den Beobachtungszeitraum als erwartetes räumliches-zeitliches Normverhalten, mithin Vergleichsverhalten, dienen. Beispielsweise kann durch den Vergleich des Kolonnenverlaufs, beispielsweise also der mittleren Bahn der Kolonne, mit der Trajektorie eines einzelnen Fahrzeugs das Schlingern dieses Fahrzeugs aufgrund schlechter Bereifung, Aquaplaning oder Eis erkannt werden. Indem also jeweils das dynamische Verhalten (längs und quer) der einzelnen Fahrzeuge entlang einer Fahrzeugkolonne gegenüber dem dynamischen Verhalten der Kolonne bewertet wird, kann frühzeitig auf eine potentielle Gefährdung geschlossen werden. Tritt beispielsweise bei einem Fahrzeug eine starke Abweichung der Längsgeschwindigkeit beziehungsweise der Längsbeschleunigung gegenüber der mittleren Kolonnengeschwindigkeit beziehungsweise der mittleren Kolonnenbeschleunigung auf, kann auf eine entsprechende Gefährdung, beispielsweise ein Hindernis oder ein langsames Fahrzeug, geschlossen werden.

Selbstverständlich ist es jedoch auch denkbar, als Vergleichsverhalten für die einzelnen Fahrzeuge ein auf Vorgaben basierendes und/oder statistisch ermitteltes Vergleichsverhalten zu verwenden, wie dies bereits beschrieben wurde. Insbesondere im Fall der Auswertung von Kolonnenspurinformationen vieler Kraftfahrzeuge wird dann ein Langzeit-Verhalten im Gegensatz zu einem aktuellen Verhalten bei Vergleich mit der aktuellen Kolonnenspurinformation herangezogen.

Wie bereits erwähnt wurde, sind verschiedene Maßnahmen bei Erfüllung eines Aktionskriteriums denkbar, die je nach Differenzierung im Gefährdungswert, dem selbstverständlich weitere Gefährdungsinformationen zugeordnet sein können, hervorragend auf die aktuelle Situation angepasst werden können. Beispiele sind neben Fahreingriffen die Vorkonditionierung von Fahrzeugsystemen, insbesondere ein Vorbefüllen der Bremsen, ein Anpassung von Sicherheitsabständen, die Ansteuerung von aktiven Sicherheitssystemen wie Airbags, reversiblen Gurtstraffern und Kopfstützen bei einer unvermeidbaren Kollision und dergleichen. Auch im Hinblick auf die Warnung und Information des Fahrers bietet das erfindungsgemäße Verfahren eine Vielzahl von Möglichkeiten. Insbesondere kann eine Anzeigevorrichtung verwendet werden, an der fahrspurgenau beziehungsweise kolonnengenau Gefährdungen visualisiert werden. Auch eine Umparametrierung anderer Fahrzeugsysteme ist denkbar, beispielsweise eines ACC-Systems; in vielen Fällen wird jedoch die eigene Geschwindigkeit an die Situation angepasst gesteuert werden.

Wie bereits erwähnt wurde, wird die Kolonnenspurinformation aus Umfelddaten über die Umgebung des Kraftfahrzeugs ermittelt, zu deren Erhalt verschiedene Möglichkeiten existieren, insbesondere über Umfeldsensoren des Kraftfahrzeugs und/oder Kraftfahrzeug-zu-Kraftfahrzeug-Kommunikation, nachdem bereits vorgeschlagen wurde, dass andere Kraftfahrzeuge ihre Position und/oder ihre Dynamikdaten übertragen können. Nachdem es im Stand der Technik bekannt ist, derartige Umfelddaten in einem Umfeldmodell zweckmäßig zu fusionieren, ist es auch im Rahmend er vorliegenden Erfindung zweckmäßig, wenn bei der Ermittlung der Kolonnenspurinformation ein Umfeldmodell verwendet wird, insbesondere ein Objekte in der Umgebung des Kraftfahrzeugs mit zugeordneten Attributen enthaltendes Umfeldmodell. Ein grober Vergleich der Positionsverläufe verschiedener Objekte in der Umgebung des Kraftfahrzeugs kann zur Zuordnung von Fahrzeugen zu einer Kolonne verwendet werden, wobei in dem Umfeldmodell idealerweise die Objekte bereits mit ihrer Position, dem zeitlichen Positionsverlauf, der Geschwindigkeit, ihrem Geschwindigkeitsverlauf und ihrer Beschleunigung und ihrem Beschleunigungsverlauf abgespeichert sind, so dass eine unmittelbare Auswertung zur Ermittlung der Kolonnenspurinformation erfolgen kann.

Eine besonders vorteilhafte Ausgestaltung der vorliegenden Erfindung sieht vor, dass eine bei der Auswertung der Kolonnenspurinformation ermittelte Gefährdungsinformation an wenigstens ein weiteres Kraftfahrzeug übertragen wird, insbesondere über Kraftfahrzeug-zu-Kraftfahrzeug-Kommunikation. Mithin ist es auch möglich, andere Verkehrsteilnehmer, die Gefährdungen nicht oder noch nicht detektieren können, zu informieren, so dass auch dort entsprechende Maßnahmen eingeleitet werden können, beispielsweise im Hinblick auf die Information des Fahrers und/oder durch sonstige Maßnahmen, insbesondere Fahreingriffe.

Zweckmäßigerweise kann die Kolonnenspurinformation unter Berücksichtigung von Sensordaten wenigstens eines in Fahrtrichtung des Kraftfahrzeugs ausgerichteten Radarsensors ermittelt werden, welcher zur Erfassung von durch ein unmittelbar voranfahrendes Fahrzeug verdeckten weiteren voranfahrenden Kraftfahrzeugen angeordnet ist. Dabei wird von der Fähigkeit der Radarsensoren profitiert, auch verdeckte vorausfahrende Fahrzeuge zu detektieren. Untersuchungen haben gezeigt, dass es bestimmte Anordnungen von Radarsensoren hervorragend erlauben, auch dem unmittelbar voranfahrenden Fahrzeug voranfahrende Fahrzeuge zu erfassen. Werden beispielsweise bei einer Frequenz von 77 GHz arbeitende Radarsensoren verwendet, konnte gezeigt werden, dass durch Mehrfachreflektionen, insbesondere auch am Boden, Fahrzeuge detektiert werden können, auf die die Sicht grundsätzlich verdeckt ist. Während in bislang bekannten Systemen derartige Sensordaten häufig verworfen werden, kann erfindungsgemäß vorgesehen sein, aufgrund der Optimierung des Radarsensors zur Erfassung einer voranfahrenden Kolonne diese optimal zu nutzen. Vorteilhaft hierbei ist, dass Radarsensoren in vielen modernen Kraftfahrzeugen ohnehin verbaut sind, mithin bereits vorhandene Umfeldsensoren des Kraftfahrzeugs genutzt werden können, die bei verschiedenen Fahrerassistenzsystemen eingesetzt werden können. Hiermit entstehen keine zusätzlichen Kosten.

Besonders bevorzugt in diesem Zusammenhang ist es, wenn die Anordnung des Radarsensors in einem Optimierungsverfahren derart gewählt wird, dass er möglichst tief an der Karosserie unter Einhaltung einer maximal zulässigen Störung durch Nahbereichsbodenreflexionen angeordnet ist. Eine Anordnung möglichst dicht am Boden ermöglicht es umso besser, durch Reflexion am Boden unmittelbar vorausfahrende Kraftfahrzeuge zu umgehen und mithin Daten weiter vorausfahrender Fahrzeuge zu erhalten, wobei eine derartige Anordnungsstrategie jedoch an Grenzen stößt, wenn im Nahbereich des Radarsensors entstehende Reflexionen zu starke Störungen verursachen würden. Untersuchungen der Anmelderin haben gezeigt, dass eine Art Wendepunkt existiert, an dem eine Störung durch Nahbereichsreflexionen wieder stärker wird, mithin in einem Optimierungsverfahren ein optimales Intervall oder gar ein optimaler Punkt, nämlich dieser Wendepunkt, ermittelt werden kann, an dem Radarsensoren angeordnet sein sollten, um optimal eine dem eigenen Kraftfahrzeug vorausfahrende Kolonne detektieren zu können.

Denkbar ist es im Rahmen der Erfindung auch, dass die Kolonneninformation ausschließlich aus von mit Sensoren des Kraftfahrzeugs aufgenommenen Sensordaten, insbesondere ausschließlich aus Sensordaten des wenigstens einen Radarsensors, ermittelt wird. Es ist also möglich, die Kolonneninformation allein durch Auswertung von Sensordaten der fahrzeugeigenen Umfeldsensorik zu erhalten, wobei es in Ausgestaltungen möglich ist, beispielsweise auch Sensordaten von Lasersensoren und/oder Kameras zu berücksichtigen. Jedoch sind auch Ausgestaltungen möglich, in denen allein die Nutzung von Radarsensoren bereits ausreichend ist, um hinreichend genaue Umfelddaten zu ermitteln, um die Kolonnenspurinformation zu generieren. Kraftfahrzeug-zu-Kraftfahrzeug-Kommunikation ist dann nicht mehr notwendig.

Neben dem Verfahren betrifft die Erfindung auch ein Kraftfahrzeug, umfassend wenigstens ein Sicherheitssystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchen mithin ebenso die Vorteile der Erfindung erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Skizze zur Ermittlung der Kolonnenspurinformation,
- Fig. 2: einen Überblick über Realisierungsmöglichkeiten des erfindungsgemäßen Verfahrens,
- Fig. 3: eine Abweichung einer Kolonnenspur vom Vergleichsverhalten,
- Fig. 4: eine Abweichung des Positionsverlaufs eines einzelnen Kraftfahrzeugs von dem Kolonnenverlauf, und
- Fig. 5: ein erfindungsgemäßes Kraftfahrzeug.

Im erfindungsgemäßen Verfahren und auch in den hier dargestellten Ausführungsbeispielen werden Umfelddaten in einem Kraftfahrzeug, möglichst als ein Umfeldmodell zusammengefasst, genutzt, um Kolonnen vor dem Kraftfahrzeug zu identifizieren und über eine Kolonnenspurinformation zu beschreiben, die für die gesamte Kolonne deren örtlichen und dynamischen Verlauf enthält. Die Umfelddaten können dabei durch Umfeldsensoren ermittelt werden, aber auch aus digitalem Kartenmaterial eines Navigationssystems und Kraftfahrzeug-zu-Kraftfahrzeug-Kommunikation. In einem bevorzugten Ausführungsbeispiel ist es denkbar, dass die Kolonnenspurinformation allein aufgrund von Sensordaten der Umfeldsensoren ermittelt wird, wobei wenigstens ein Teil der Umfeldsensoren Radarsensoren sind, die es über Reflexionen an der Fahrbahnoberfläche erlauben, auch dem unmittelbar voranfahrenden Fahrzeug voranfahrende weitere Fahrzeuge zu detektieren. Prinzipiell ist eine solche Radarsensorik bereits ausreichend, um eine dem Kraftfahrzeug voranfahrende Kolonne bis zu einem gewissen Grad zu beschreiben, nachdem die Sensordaten der Radarsensoren zu Objektlisten zusammengefasst werden, die neben einer Positionsangabe auch Informationen zur Geschwindigkeit und gegebenenfalls Beschleunigung enthalten können.

Neben der Kolonnenspurinformation, die das akkumulierte Verhalten der gesamten Kolonne betrifft, wobei selbstverständlich bei der Ermittlung der Kolonnenspurinformation "Ausreißer", also besonders stark abweichende Mitglieder der Kolonne, die beispielsweise einen Spurwechsel oder dergleichen ausführen, ausgeschlossen werden können, sehen die besonders bevorzugten Ausführungsbeispiele der vorliegenden Erfindung auch vor, für die Fahrzeuge der Kolonne Einzelfahrzeuginformationen zu ermitteln und vorzuhalten. Sowohl für die Kolonnenspurinformation als auch für Einzelfahrzeuginformationen wird der zeitliche Verlauf der Positionen der Kolonnenfahrzeuge bzw. des Fahrzeugs wie auch der Geschwindigkeiten und gegebenenfalls der Beschleunigungen berücksichtigt.

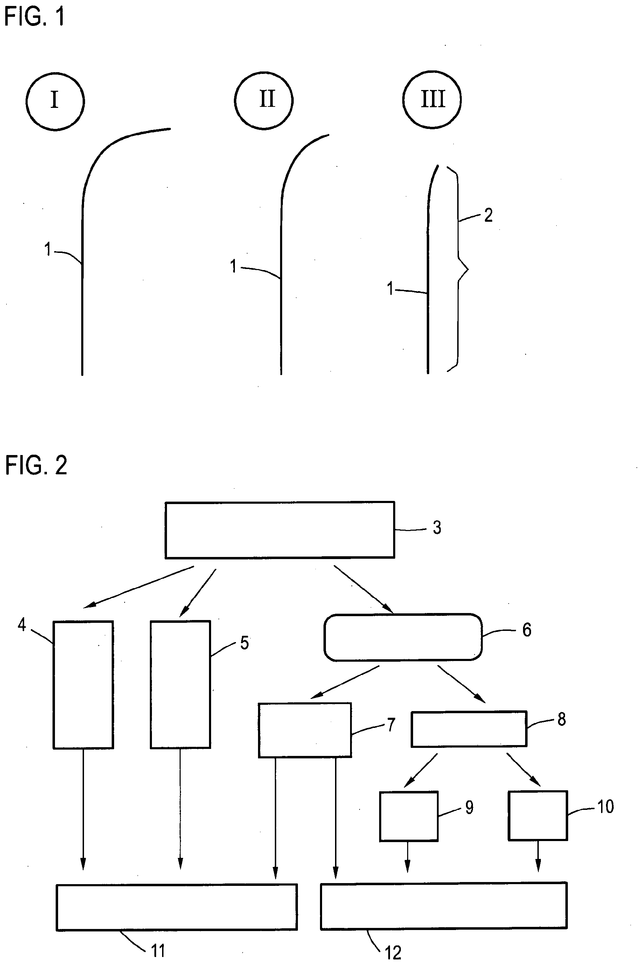

Die Kolonnenspurinformation kann als das mittlere Kolonnenverhalten verstanden werden, wie dies durch Fig. 1 näher erläutert wird.

Dort sind unter I, II und III Positionsverläufe 1 aufeinanderfolgender Fahrzeuge der Kolonne gezeigt. Ersichtlich haben die Fahrzeuge zum aktuellen Zeitpunkt bereits zu einem guten Teil den gleichen Weg zurückgelegt, der sich vorliegend durch den im Positionsverlauf 1 des Fahrzeugs III enthaltenen Anteil 2 ergibt. Für den Anteil 2 liegen also akkumulierte Positionsdaten sowie Geschwindigkeits- und Beschleunigungsdaten aller drei Fahrzeuge vor. Für die offensichtlich am Ende des Teils 2 beginnende Kurve liegen bis zum vordersten erfassten Fahrzeug, vgl. II hin zu I, immer weniger akkumulierte Daten vor, nämlich zunächst nur die Daten der Positionsverläufe 1 aus II und I, schließlich nur noch die Daten aus I.

Statistische Verfahren ermöglichen es nun, in einem ortsfesten Koordinatensystem eine mittlere Bahn der Kolonne zu bestimmen, wobei jedem dieser Ortspunkte aufgrund der vorliegenden Geschwindigkeits- und Beschleunigungsinformationen auch ein mittleres Geschwindigkeitsdatum und ein mittleres Beschleunigungsdatum zugeordnet werden können, so dass die Kolonnenspurinformation neben dem Kolonnenverlauf mithin auch einen Geschwindigkeitsverlauf und einen Beschleunigungsverlauf enthält.

Vorliegend wird die Kolonnenspurinformation jedoch nicht nur in einem ortsfesten, nicht bewegten Koordinatensystem bestimmt, sondern auch in einem mit dem langsamsten voranfahrenden Fahrzeug mitbewegten Koordinatensystem, da auf diese Weise durch den Rest der Kolonne durchgeführte Überholvorgänge festgestellt werden können. Denn im mitbewegten Koordinatensystem des langsamsten Fahrzeugs, das von den übrigen Fahrzeugen der Kolonne überholt wird, sind die Überholbahnen, mithin relativen Positionsverläufe der anderen Fahrzeuge, vergleichbar und damit erkennbar, so dass der weiteren Erläuterung vorgreifend Überholvorgänge auf diese Art erkannt und bewertet werden können. In einem ortsfesten, nicht bewegten Koordinatensystem wäre dies schwieriger, da die einzelnen Überholvorgänge ja an unterschiedlichen Stellen im Koordinatensystem stattfinden.

Die Kernidee des erfindungsgemäßen Verfahrens ist es, Gefährdungen durch einen Vergleich der Kolonnenspurinformation insgesamt oder der Einzelfahrzeuginformation, mithin des Kolonnenverhaltens oder des Einzelfahrzeugverhaltens, mit einem Normverhalten, welches im Folgenden als Vergleichsverhalten bezeichnet wird, festzustellen. Die Möglichkeiten hierfür sind durch die Übersicht in Fig. 2 näher erläutert.

Der Kasten 3 symbolisiert diese grundsätzlich möglichen Vergleiche in ihrer Gesamtheit, also die Erkennung einer Abweichung vom "Normverhalten" beziehungsweise einer a priori-Erwartung.

Fig. 2 zeigt zunächst Möglichkeiten zur Ermittlung des Vergleichsverhaltens, welches beispielsweise durch eine Vergleichsinformation beschrieben sein kann. Zweckmäßigerweise kann das Vergleichsverhalten wie die Kolonnenspurinformation beziehungsweise die Einzelfahrzeuginformation einen Positionsverlauf, einen Geschwindigkeitsverlauf und einen Beschleunigungsverlauf enthalten. Es wird darauf hingewiesen, dass verschiedene Vergleichsverhalten und somit verschiedene Vergleiche in Ausführungsbeispielen des erfindungsgemäßen Verfahrens denkbar sind.

Der Kasten 4 symbolisiert eine erste Möglichkeit zur Ermittlung eines Vergleichsverhaltens aus einer Vorgabe, dort der a priori-Erwartung an die Gleichmäßigkeit im Geschwindigkeits- und Krümmungsverlauf einer Kolonnenspur. Dabei wird der Ermittlung des Vergleichsverhaltens also zugrunde gelegt, dass im ungefährdeten Ablauf des Verkehrs starke Brems- und Beschleunigungsmanöver sowie starke Ausweichmanöver nicht vorkommen sollten. Beispielsweise widerspricht ein starkes Abbremsen und Ausweichen der Fahrzeuge einer Kolonne um ein Unfallfahrzeug dieser Erwartung/Vorgabe.

Auch der Kasten 5 symbolisiert die Ermittlung des Vergleichsverhaltens aus einer Vorgabe, nämlich dort der a priori-Erwartung, dass die Kolonne einem bekannten Fahrspurverlauf folgt. Ein bekannter Fahrspurverlauf kann aus digitalen Kartendaten eines Navigationssystems des Kraftfahrzeugs bestimmt werden, aber auch aus Sensordaten folgen, beispielsweise aus Daten einer nach vorne gerichteten Kamera, in der Fahrspurbegrenzungen detektiert werden, wie dies beispielsweise ohnehin durch ein Querführungssystem, insbesondere ein Spurhaltesystem, geschehen kann. Wird nun davon ausgegangen, dass die Fahrzeuge der Kolonne diesem Fahrspurverlauf folgen, sich dabei an die Geschwindigkeitsbegrenzung, die ebenso aus digitalen Kartendaten oder aus einer Verkehrszeichenerkennung ermittelt werden kann, halten und übliche Brems- und Beschleunigungsvorgänge nach dem Krümmungsverlauf durchführen, ergibt sich ebenfalls ein Vergleichsverhalten, das geeignet ist, beispielsweise mit dem Kolonnenverhalten verglichen zu werden.

Die durch die Kästen 4 und 5 symbolisierten Möglichkeiten haben gemein, dass eine Vorgabe beziehungsweise a priori-Erwartung verwendet wird, um das Vergleichsverhalten zu generieren. Möglich ist es aber auch, das Vergleichsverhalten aus der Kolonnenspurinformation zu ermitteln, wie dies durch den Kasten 6 allgemein symbolisiert ist. Dafür existieren wiederum verschiedene Möglichkeiten, nämlich zum einen, durch den Kasten 7 symbolisiert, eine Generierung eines Langzeit-Vergleichsverhaltens, das durch von vielen Kraftfahrzeugen erkannte Kolonnenspurinformationen definiert ist, zum anderen aber ein temporäres Vergleichsverhalten gemäß Kasten 8, welches allein durch die aktuelle Kolonnenspurinformation definiert wird.

Das Langzeit-Vergleichsverhalten kann beispielsweise durch eine zentrale Recheneinrichtung mit einer Datenbank ermittelt und zur Verfügung gestellt werden. Über Kraftfahrzeug-zu-Infrastruktur-Kommunikation und/oder ein Mobilfunknetz werden Kolonnenspurinformationen, die von verschiedenen Kraftfahrzeugen für bestimmte Fahrspuren und Straßenabschnitte ermittelt wurden, an die zentrale Recheneinrichtung übermittelt. Dort werden sie durch statistische Methoden ausgewertet, um das Vergleichsverhalten zu erhalten. Zweckmäßig ist dabei eine Aufschlüsselung nach Umgebungsbedingungen, insbesondere Witterungsbedingungen, Beleuchtungsbedingungen, der Tageszeit und dem Wochentag, so dass letztlich tageszeit-, witterungs-, beleuchtungs- und wochentagspezifische Vergleichsverhalten berechnet werden und wiederum über Kraftfahrzeug-zu-Infrastruktur-Kommunikation und/oder ein Mobilfunknetz als erwartetes Vergleichsverhalten pro Fahrspur in Kraftfahrzeugen zur Verfügung gestellt werden kann, die gerade eine Vergleichsgrundlage benötigen. Die Vergleichsverhalten werden stetig anhand neuer von Kraftfahrzeugen gelieferter Daten aktualisiert.

Wenn, vgl. Kasten 8, ein temporäres Vergleichsverhalten aufgrund der aktuellen Kolonnenspurinformation definiert werden soll, ist gemäß Kasten 9 zunächst eine ortsfeste Beschreibung der Verläufe denkbar, wie dies auch bezüglich Fig. 1 näher erläutert wurde. Alternativ wurde bereits die mitbewegte Beschreibung der Kolonnenspurinformation bei Überholvorgängen genannt. Dann wird, wie erwähnt, ein Koordinatensystem verwendet, das mit dem langsamen Fahrzeug, das überholt wird, mitbewegt wird, so dass sich aufgrund der Vergleichbarkeit der Überholbahnen eine sinnvolle Kolonnenspurinformation ergibt, die in einem ortsfesten Koordinatensystem gegebenenfalls nicht erkennbar gewesen wäre. Diese mitbewegte Beschreibung wird durch den Kasten 10 symbolisiert. Dabei sei an dieser Stelle noch angemerkt, dass Ausführungsbeispiele denkbar sind, in denen, auch wenn dies in Fig. 2 nicht explizit gezeigt ist, ein auf einer Vorgabe beruhendes Vergleichsverhalten für derartige Überholbahnen und die zugeordneten Geschwindigkeits- und Beschleunigungsverläufe existiert, mit denen die Kolonnenspurinformation im mitbewegten Koordinatensystem verglichen wird, um Abweichungen im Überholverhalten der gesamten Kolonne von der üblichen Überholtätigkeit detektieren zu können.

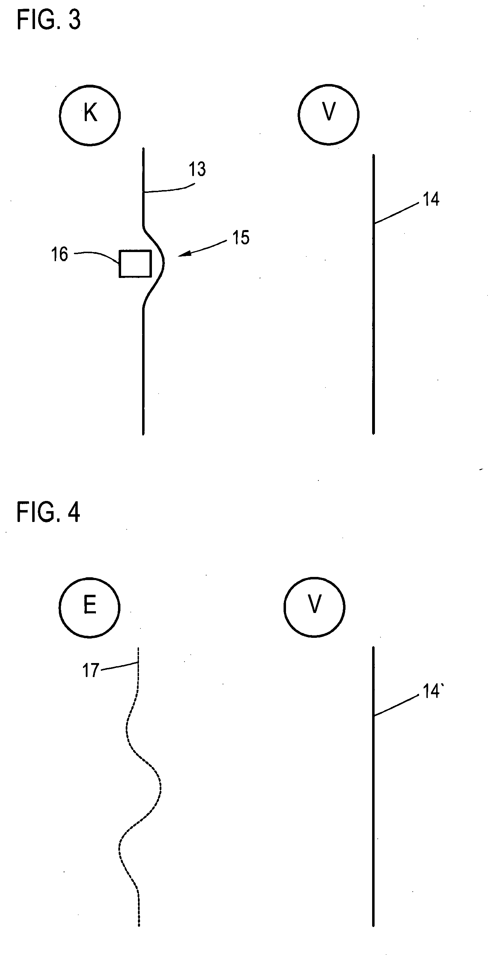

Die wesentlichen sich ergebenden Vergleichsmöglichkeiten sind in Fig. 2 durch die Kästen 11 und 12 erläutert. Der Kasten 11 symbolisiert einen Vergleich des durch die Kolonnenspurinformation beschriebene Kolonnenverhaltens mit dem Vergleichsverhalten, das bedeutet, es wird überprüft, ob sich die Kolonne insgesamt abweichend von einer Erwartung verhält, sei es eine auf einer Vorgabe basierenden Erwartung wie gemäß der Kästen 4 und 5 oder einer auf dem statistisch analysierten Langzeitverhalten basierenden Erwartung gemäß dem Kasten 7. Abweichungen können dabei insbesondere auf Gefahrenstellen hinweisen, wie dies durch Fig. 3 näher erläutert werden soll.

Dort ist das Kolonnenverhalten in Form des Positionsverlaufs 13 (Kolonnenverlaufs) bei "K" gezeigt, das Vergleichsverhalten mit dem Fahrspurverlauf 14 bei "V". Während das Vergleichsverhalten einen geradlinigen Verlauf zeigt, führen sämtliche Fahrzeuge der Kolonne im Bereich 15 einen Ausweichvorgang durch, der sich nicht nur im Positionsverlauf, also dem Kolonnenverlauf 13, sondern auch im zugeordneten Geschwindigkeitsverlauf und Beschleunigungsverlauf zeigt, beispielsweise dem Abbremsen auf ein Hindernis 16. Eine derartige Gefahrenstelle kann mithin durch Analyse der Abweichung frühzeitig erkannt werden.

Der Kasten 12 der Fig. 2 symbolisiert die Erkennung einer Abweichung durch Vergleich des Verhaltens eines einzelnen Fahrzeugs gegenüber dem Vergleichsverhalten. Auch hiermit können Gefährdungen erkannt werden, wie in einem Beispiel in Fig. 4 näher dargestellt ist. Dabei ist unter "E" der Positionsverlauf 17 eines einzelnen Fahrzeugs der Kolonne gezeigt, unter "V" der Positionsverlauf 14' des Vergleichsverhaltens, welches insbesondere aus der statistischen Langzeitauswertung der Kolonnenspurinformation vieler Fahrzeuge (Kasten 7) oder aus der Auswertung nur der aktuellen Kolonnenspurinformation (Kasten 8) folgt. Es ist zu erkennen, dass der Positionsverlauf 17 einen schlingernden Verlauf der Bahn des einzelnen Kraftfahrzeugs im Vergleich zum Positionsverlauf 14' zeigt. Dies kann auf schlechte Straßenbedingungen, beispielsweise ein Aquaplaning, oder auf einen Fahrfehler des entsprechenden Fahrers hinweisen, was beides Gefährdungstatbestände wären, die einen Gefährdungswert erhöhen können beziehungsweise allgemein gesagt eine Gefährdungsinformation liefern.

Es sei an dieser Stelle noch angemerkt, dass sich diese Art der Auswertung und des Vergleichs selbstverständlich auch im Fall des mitbewegten Koordinatensystems (Kasten 10) anwenden lässt. Während die anderen Fahrzeuge der Überholkolonne ein normales Überholverhalten definieren, kann ein abweichender Positionsverlauf eines einzelnen Fahrzeugs beziehungsweise ein abweichendes Geschwindigkeits- und/oder Beschleunigungsprofil eines einzelnen Kraftfahrzeugs einen Hinweis auf eine mögliche Gefährdung geben, wobei zur Auswertung beispielsweise geeignete Klassifikatoren eingesetzt werden können.

Es zeigt sich durch die Beispiele insbesondere, dass mithin auch eine Klassifizierung der Gefährdung, beispielsweise ob eine Gefahrenstelle vorliegt, ungünstige Fahrbedingungen gegeben sind und dergleichen, im Rahmen der vorliegenden Erfindung vorteilhaft möglich ist und auch durchgeführt wird, so dass möglichst genaue Gefährdungsinformationen und mithin Gefährdungswerte, die gegen Aktionskriterien geprüft werden, um Warninformationen oder Maßnahmen zur Erhöhung der Sicherheit auszulösen, erhalten werden.

Insgesamt ermöglicht es der Einsatz der hier dargestellten Verfahren in einem Sicherheitssystem also, Gefahrensituationen und Gefährdungen verbessert und früher zu erkennen und auch zu klassifizieren, so dass insgesamt verbessert eine Erhöhung der Sicherheit vorgenommen werden kann. Eine Ausgestaltung sieht auch vor, dass andere Verkehrsteilnehmer, insbesondere über Kraftfahrzeug-zu-Kraftfahrzeug-Kommunikation, über erkannte Gefährdungen informiert werden können, indem beispielsweise eine Gefährdungsinformation an diese übertragen wird.

Beispiele für Maßnahmen, die im Sicherheitssystem aufgelöst werden können, umfassen eine möglichst genaue Warninformation an den Fahrer, beispielsweise eine Anzeige einer Gefahrenstelle innerhalb der gefahrenen Fahrspur beziehungsweise der vorausfahrenden Kolonne, wozu eine geeignete Anzeigevorrichtung eingesetzt werden kann. Die Information über Gefährdungen kann auch dazu genutzt werden, die Geschwindigkeit des eigenen Kraftfahrzeugs an die Situation anzupassen; zudem ist eine Vorkonditionierung von Fahrzeugsystemen als Maßnahme denkbar, um die Sicherheit zu erhöhen, beispielsweise ein Vorbefüllen der Bremsen oder dergleichen.

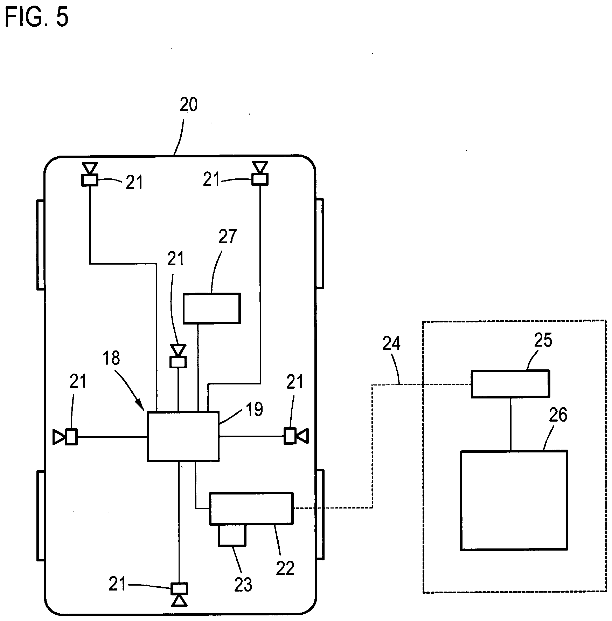

Fig. 5 zeigt schließlich eine Prinzipskizze eines erfindungsgemäßen Kraftfahrzeugs. Dieses umfasst ein Sicherheitssystem 18, welches ein zur Durchführung des erfindungsgemäßen Verfahrens ausgebildetes Steuergerät 19 aufweist. Über ein Bussystem des Kraftfahrzeugs 20 ist das Steuergerät 19 mit verschiedenen Umfeldsensoren 21 und sonstigen Fahrzeugsystemen verbunden, um Egodaten und Umfelddaten zu erhalten. Über eine Anzeigevorrichtung 27 kann eine Warninformation an den Fahrer ausgegeben werden. Das Kraftfahrzeug umfasst ferner eine Kommunikationseinrichtung 22, die auch zur Kraftfahrzeug-zu-Kraftfahrzeug und zur Kraftfahrzeug-zu-Infrastruktur-Kommunikation ausgebildet sein kann. Der Kommunikationseinrichtung 22 kann auch der GPS-Sensor 23 zugeordnet sein.

Über die Kommunikationseinrichtung 22 können vom Steuergerät 19 ermittelte Gefährdungsinformationen an andere Verkehrsteilnehmer übertragen werden, insbesondere über Kraftfahrzeug-zu-Kraftfahrzeug-Kommunikation, es ist jedoch auch möglich, Kolonnenspurinformationen und gegebenenfalls weitere Daten über eine Kommunikationsverbindung 24 an eine Kommunikationseinrichtung 25 einer zentralen Recheneinrichtung 26, die in Fig. 5 ebenso gezeigt ist, zu übertragen. Dort können die Kolonnenspurinformationen vieler Kraftfahrzeuge ausgewertet werden, um Vergleichsverhalten für verschiedene Umgebungsbedingungen zu ermitteln, die über die Kommunikationsverbindung 24 Kraftfahrzeugen 20 wieder zur Verfügung gestellt werden können, um Vergleiche mit Einzelfahrzeugverhalten und Kolonnenverhalten in aktuellen Fällen durchführen zu können.

## Patentansprüche

1. Verfahren zum Betrieb eines Sicherheitssystems (18) eines Kraftfahrzeugs (20), wobei aus die Umgebung des Kraftfahrzeugs (20) beschreibenden Umfelddaten und auf das Kraftfahrzeug (20) bezogenen Egodaten wenigstens ein Gefährdungswert ermittelt wird, wobei bei Erfüllung wenigstens eines Aktionskriteriums für den Gefährdungswert eine Warninformation an den Fahrer ausgegeben wird und/oder wenigstens eine Maßnahme, insbesondere ein Fahreingriff, zur Erhöhung der Sicherheit des Kraftfahrzeugs (20) durchgeführt wird, wobei bei der Ermittlung des Gefährdungswerts eine das Kolonnenverhalten einer dem Kraftfahrzeug (20) vorausfahrenden Kolonne von weiteren Fahrzeugen beschreibende, aus den Umfelddaten ermittelte Kolonnenspurinformation berücksichtigt wird,
**dadurch gekennzeichnet,**
**dass** als Kolonnenspurinformation wenigstens ein Kolonnenverlauf (13), der eine mittlere Bahn der Kolonne beschreibt, aus dem zeitlichen Positionsverlauf (1, 17) der Fahrzeuge der Kolonne ermittelt wird.

2. Verfahren nach Anspruch 1,
**dadurch gekennzeichnet,**
**dass** als Kolonnenspurinformation wenigstens ein ortsbezogener Geschwindigkeitsverlauf und/oder Beschleunigungsverlauf in der Kolonne ermittelt wird.

3. Verfahren nach Anspruch 2,
**dadurch gekennzeichnet,**
**dass** die Verläufe (1, 17) ortsfest und/oder in wenigstens einem mit einem Fahrzeug der Kolonne bewegten Koordinatensystem ermittelt werden, insbesondere in einem mit dem langsamsten voranfahrenden Fahrzeug mitbewegtem Koordinatensystem.

4. Verfahren nach einem der vorangehenden Ansprüche,
**dadurch gekennzeichnet,**
**dass** eine Abweichung des Verhaltens wenigstens eines Fahrzeugs der Kolonne von einem Vergleichsverhalten ermittelt und bei der Ermittlung des Gefährdungswertes berücksichtigt wird.

5. Verfahren nach Anspruch 4,
**dadurch gekennzeichnet,**
**dass** mit einem aus einer Vorgabe und/oder statistisch ermittelten Vergleichsverhalten verglichen wird, insbesondere bezüglich des Kolonnenverlaufs (13) und des Geschwindigkeitsverlaufs.

6. Verfahren nach Anspruch 5,
**dadurch gekennzeichnet,**
**dass** als Vorgabe für das Vergleichsverhalten ein bekannter Fahrspurverlauf (14), dem die Kolonne folgen soll, und/oder ein eine hohe Gleichmäßigkeit beschreibendes Gleichmäßigkeitsmaß für den Kolonnenverlauf und/oder den Geschwindigkeitsverlauf und/oder den Beschleunigungsverlauf und/oder eine bekannte Geschwindigkeitsbegrenzung verwendet wird.

7. Verfahren nach Anspruch 5 oder 6,
**dadurch gekennzeichnet,**
**dass** ermittelte Kolonnenspurinformationen, insbesondere über Kraftfahrzeug-zu-Infrastrukturkommunikation und/oder ein Mobilfunknetz, an eine zentrale Recheneinrichtung (26), insbesondere einen Server, übertragen werden, wo die Kolonnenspurinformationen mehrerer Kraftfahrzeuge (20) zur Ermittlung des Vergleichsverhaltens statistisch ausgewertet und das Vergleichsverhalten insbesondere ortsbezogen an Kraftfahrzeuge (20) zum Vergleich mit aktueller Kolonnenspurinformation übermittelt werden.

8. Verfahren nach Anspruch 7,
**dadurch gekennzeichnet,**
**dass** die Vergleichsverhalten abhängig von wenigstens einem die Umgebungsbedingungen beschreibenden Umgebungsparameter ermittelt werden, insbesondere abhängig von Witterungsbedingungen und/oder Beleuchtungsbedingungen und/oder einer Tageszeit und/oder einem Wochentag.

9. Verfahren nach einem der Ansprüche 3 bis 8,
**dadurch gekennzeichnet,**
**dass** das durch die Kolonnenspurinformation beschriebene Kolonnenverhalten mit dem Vergleichsverhalten verglichen wird.

10. Verfahren nach Anspruch 9,
**dadurch gekennzeichnet,**
**dass** bei einer die Umfahrung eines Ortes andeutenden Abweichung des Kolonnenverlaufs (13) und/oder Geschwindigkeitsverlaufs von einem Fahrspurverlauf (14) bzw. Vergleichsgeschwindigkeitsverlauf, die in dem Vergleich festgestellt wurde, auf eine Gefahrenstelle an dem Ort geschlossen wird und/oder bei einer erkannten Überholsituation als Abweichung eine Geschwindigkeitsdifferenz der maximalen Geschwindigkeit überholender Fahrzeuge von einer Geschwindigkeitsbegrenzung betrachtet wird.

11. Verfahren nach einem der Ansprüche 3 bis 10,
**dadurch gekennzeichnet,**
**dass** das Verhalten eines einzelnen, insbesondere jedes einzelnen, Fahrzeugs der Kolonne mit dem Vergleichsverhalten verglichen wird.

12. Verfahren nach Anspruch 11,
**dadurch gekennzeichnet,**
**dass** als Vergleichsverhalten das aus dem Verhalten aller Fahrzeuge der Kolonne gebildete Kolonnenverhalten verwendet wird, wobei bei einer festgestellten, ein Kriterium erfüllenden Abweichung des Verhaltens eines Fahrzeugs vom Kolonnenverhalten ein höherer Gefährdungswert angenommen wird und/oder eine Art der Abweichung ermittelt wird, insbesondere ein Schlingern des Fahrzeugs.

13. Verfahren nach einem der vorangehenden Ansprüche,
**dadurch gekennzeichnet,**
**dass** bei der Ermittlung der Kolonnenspurinformation ein Umfeldmodell verwendet wird, insbesondere ein Objekte in der Umgebung des Kraftfahrzeugs (20) mit Attributen enthaltendes Umfeldmodell.

14. Verfahren nach einem der vorangehenden Ansprüche,
**dadurch gekennzeichnet,**
**dass** eine bei der Auswertung der Kolonnenspurinformation ermittelte Gefährdungsinformation an wenigstens ein weiteres Kraftfahrzeug übertragen wird, insbesondere über Kraftfahrzeug-zu-Kraftfahrzeug-Kommunikation.

15. Verfahren nach einem der vorangehenden Ansprüche,
**dadurch gekennzeichnet,**
**dass** die Kolonnenspurinformation unter Berücksichtigung von Sensordaten wenigstens eines in Fahrtrichtung des Kraftfahrzeugs (20) ausgerichteten Radarsensors ermittelt werden, welcher zur Erfassung von durch ein unmittelbar voranfahrendes Fahrzeug verdeckten weiteren voranfahrenden Kraftfahrzeugen angeordnet ist.

## Claims

1. Method for operating a safety system (18) of a motor vehicle(20) wherein at least one hazard value is determined from surroundings data describing the environment of the motor vehicle (20) and from ego data relating to the motor vehicle (20), wherein when at least one action criterion for the hazard value is satisfied, warning information is output to the driver and/or at least one measure, in particular a driving intervention, is carried out in order to increase the safety of the motor vehicle (20), wherein column lane information, which describes the column behaviour of a column of other vehicles driving ahead of the motor vehicle (20) and which is determined from the surroundings data, is taken into account during the determination of the hazard value,
**characterised in that**
at least one column profile (13), which describes a central path of the column, is determined as column lane information from the position profile (1, 17) of the vehicles in the column over time.

2. Method according to claim 1,
**characterised in that**
at least one location-based speed profile and/or acceleration profile in the column is determined as column lane information.

3. Method according to claim 2,
**characterised in that**
the profiles (1, 17) are determined in a stationary manner and/or in at least one coordinate system moving with one vehicle in the column, in particular in a coordinate system moving with the slowest preceding vehicle.

4. Method according to any one of the preceding claims,
**characterised in that**
a deviation in the behaviour of at least one vehicle in the column is determined by comparing behaviour and is taken into account during the determination of the hazard value.

5. Method according to claim 4,
**characterised in that**
a comparison is made with comparative behaviour determined from a parameter and/or statistically, in particular with regard to the column profile (13) and the speed profile.

6. Method according to claim 5,
**characterised in that**
a known lane profile (14), which is to be followed by the column, and/or a uniformity measurement describing high uniformity for the column profile and/or the speed profile and/or the acceleration profile and/or a known speed limit is used as the parameter for the comparative behaviour.

7. Method according to claim 5 or 6,
**characterised in that**
the determined column lane information, in particular by means of vehicle-to-infrastructure communication and/or a mobile radio network, is sent to a central computing device (26), in particular a server, where the column lane information of a plurality of motor vehicles (20) is statistically evaluated to determine the comparative behaviour and the comparative behaviour is sent in particular on a location basis to motor vehicles (20) for comparison with actual column lane information.

8. Method according to claim 7,
**characterised in that**
the comparative behaviour is determined depending on at least one environmental parameter describing the environmental conditions, in particular depending on weather conditions and/or lighting conditions and/or time of day and/or day of the week.

9. Method according to any one of claims 3 to 8,
**characterised in that**
the column behaviour described by the column lane information is compared with the comparative behaviour.

10. Method according to claim 9,
**characterised in that**
in the event of a deviation in the column profile (13) and/or speed profile from a lane profile (14) or comparative speed profile indicating the bypassing of a location, which has been identified in the comparison, a hazard point is deduced at the location and/or in the case of a known overtaking situation a speed difference between the maximum speed of overtaking vehicles and a speed limit is considered a deviation.

11. Method according to any one of claims 3 to 10,
**characterised in that**
the behaviour of an individual, in particular each individual vehicle in the column is compared with the comparative behaviour.

12. Method according to claim 11,
**characterised in that**
the column behaviour constituted from the behaviour of all vehicles in the column is used as comparative behaviour, wherein in the event of an established deviation in the behaviour of one of the vehicles from the column behaviour, which meets a criterion, a higher hazard value is assumed and/or a type of deviation is determined, in particular a rolling of the vehicle from side to side.

13. Method according to any one of the preceding claims,
**characterised in that**
an environment model is used during the determination of the column lane information, in particular an environment model with attributes containing objects in the environment of the motor vehicle (20).

14. Method according to any one of the preceding claims,
**characterised in that**
hazard information determined when evaluating the column lane information is sent to at least one other motor vehicle, in particular by means of vehicle-to-vehicle communication.

15. Method according to any one of the preceding claims,
**characterised in that**
the column lane information is determined taking account of sensor data from at least one radar sensor aligned in the direction of the travel of the motor vehicle (20), which is arranged to detect other preceding motor vehicles which are hidden by a vehicle directly in front.

## Revendications

1. Procédé de fonctionnement d'un système de sécurité (18) d'un véhicule automobile (20), dans lequel on détermine à partir de données ambiantes décrivant l'environnement du véhicule automobile (20) et de données EGO rapportées au véhicule automobile (20) une valeur de risque, dans lequel, dans le cadre au moins d'un critère d'action pour la valeur de risque, il est délivré une information d'avertissement au chauffeur et/ou au moins une mesure est effectuée, en particulier une correction de conduite, pour accroître la sécurité du véhicule automobile (20), dans lequel, lors de la détermination de la valeur de risque, on prend en compte une information de piste de file déterminée à partir des données ambiantes et décrivant le comportement d'une file d'autres véhicules se déplaçant devant le véhicule automobile (20),
**caractérisé en ce que** :
l'on détermine comme information de traçage de file au moins une variation de file (13), qui décrit un route moyenne de la file, à partir de la variation de position (1, 17) en fonction du temps des véhicules de la file.

2. Procédé selon la revendication 1,
**caractérisé en ce que** :
l'on détermine comme information de traçage de file au moins une variation locale de la vitesse et/ou une variation locale de l'accélération dans la file.

3. Procédé selon la revendication 2,
**caractérisé en ce que** :
les variations (1, 17) sont déterminées au plan fixe et/ou dans au moins un système de coordonnées déplacé avec un véhicule de la file, en particulier dans un système de coordonnées associé au véhicule se déplaçant devant le plus lent.

4. Procédé selon l'une quelconque des revendications précédentes,
**caractérisé en ce que** :
l'écart de comportement au moins d'un véhicule de la file est déterminé par un comportement comparatif et est pris en compte dans la détermination de la valeur de risque.

5. Procédé selon la revendication 4,
**caractérisé en ce que** :
l'on effectue une comparaison avec un comportement comparatif déterminé à partir d'une référence et/ou par statistiques, en particulier en matière de variation de la file (13) et de variation de la vitesse.

6. Procédé selon la revendication 5,
**caractérisé en ce que** :
l'on utilise comme référence pour le comportement comparatif une variation de voie de circulation connue (14), que la file doit suivre, et/ou une mesure d'uniformité décrivant une uniformité élevée pour la variation de la file et/ou la variation de la vitesse et/ou la variation de l'accélération et/ou une limitation de vitesse connue.

7. Procédé selon la revendication 5 ou 6,
**caractérisé en ce que** :
des informations de traçage de file déterminées sont transférées en particulier par communication entre le véhicule automobile et l'infrastructure et/ou par un réseau de téléphonie mobile à un processeur central (26), notamment à un serveur où les informations de traçage de file de plusieurs véhicules automobiles (20) sont évaluées par voie statistique pour déterminer le comportement comparatif et le comportement comparatif est transmis en particulier au plan local aux véhicules automobiles (20) pour comparaison avec les informations de traçage de file.

8. Procédé selon la revendication 7,
**caractérisé en ce que** :
les comportements comparatifs sont déterminés en fonction d'au moins un paramètre environnemental décrivant les conditions ambiantes, en particulier en fonction de conditions météorologiques et/ou de conditions d'éclairage et/ou d'un moment de la journée et/ou d'un jour de la semaine.

9. Procédé selon l'une quelconque des revendications 3 à 8,
**caractérisé en ce que** :
le comportement de la file décrit par les informations de traçage de file est comparé au comportement comparatif.

10. Procédé selon la revendication 9,
**caractérisé en ce que** :
lors d'un écart de la variation de file (13) et/ou de la variation de la vitesse indiquant le contournement d'un lieu vis-à-vis d'une variation de voie de circulation (14) ou d'une variation de vitesse comparative, qui a été établie dans la comparaison, on en conclut que le lieu est un point dangereux et/ou, lors d'une situation de dépassement reconnue, on considère comme écart une différence de vitesse des véhicules dépassant la vitesse maximale avec une limitation de vitesse.

11. Procédé selon l'une quelconque des revendications 3 à 10,
**caractérisé en ce que** :
le comportement d'un véhicule individuel, en particulier de chaque véhicule individuel de la file est comparé au comportement comparatif.

12. Procédé selon la revendication 11,
**caractérisé en ce que** :
l'on utilise commande comportement comparatif le comportement de la file formé par le comportement de tous les véhicules de la file, dans lequel, lors d'un écart établi répondant à un critère du comportement d'un véhicule vis-à-vis du comportement de la file, une valeur de risque plus élevée est admise et/ou l'on détermine un type d'écart, en particulier un mouvement de lacet du véhicule.

13. Procédé selon l'une quelconque des revendications précédentes,
**caractérisé en ce que** :
lors de la détermination des informations de traçage de file, on utilise un modèle ambiant, en particulier un objet dans l'environnement du véhicule automobile (20) avec un modèle ambiant contenant des attributs.

14. Procédé selon l'une quelconque des revendications précédentes,
**caractérisé en ce que** :
une information de risque déterminée lors de l'évaluation des informations de traçage de file est transmise à au moins un autre véhicule automobile, en particulier par communication d'un véhicule automobile à un autre véhicule automobile.

15. Procédé selon l'une quelconque des revendications précédentes,
**caractérisé en ce que** :
les informations de traçage de file sont déterminées en tenant compte de données de capteur d'au moins un capteur de radar aligné dans le sens de conduite du véhicule automobile (20), lequel capteur est agencé pour détecter d'autres véhicules automobiles situés devant masqués par un véhicule situé directement devant.
